# EUROPEAN PATENT APPLICATION

(11) **EP 4 360 736 A1**
(43) Date of publication of application: **01.05.2024**
(21) Application number: 22863693.2
(22) Date of filing: 19.07.2022
(51) Int. Cl.: B01D 50/20, F16T 1/00

(54) **DRY STEAM CHAMBER**

(30) Priority: 02.09.2021 ES 202131757 U
(71) Applicant: Zacarías Balaguer, David, 08760 Martorell (BARCELONA) (ES)
(72) Inventor: Zacarías Balaguer, David, 08760 Martorell (BARCELONA) (ES)
(74) Representative: Espiell Gomez, Ignacio
(86) International application number: PCT/ES2022/070473
(87) International publication number: WO 2023/031492

(57) **Abstract**

Disclosed is a dry steam chamber, which can be used in a steam system to eliminate water content in the form of droplets or any water microparticle produced by pressure losses in steam systems, the steam being caused to pass therethrough. The dry steam chamber comprises: a hollow body (2), closed on both sides by a front cover (3) and a back cover (4), respectively; a steam inlet tube (5) at an end of the body (2); a steam outlet tube (6) on the opposite side of the body (2); an impact cover (7) located vertically inside the body (2), close to the side on which the steam inlet tube (5) is located and covering only an upper portion of the inside of the body (2); a condensate outlet tube (8), located at the bottom of the body (2); and at least one denebuliser filter (9) installed horizontally inside the body (2) and at a central height, between the impact cover (7) and the back cover (4).

## Description

### OBJECT OF THE INVENTION

The invention, as stated in the title of the present specification, relates to a dry steam chamber that contributes advantages and features to the function intended, which are described in detail further on.

The object of the present invention lies in a device for removing any water particle or microparticle that may be carried by the steam generated by a steam generator or boiler, for example those applicable in the industry such as a feed mill, which is essentially distinguished by the fact that it is made up of a chamber inside of which it comprises a wall or impact cover on which the steam collides, making a first "decantation" and thus removing the largest drops led by the same. The liquid particles in the form of suspended droplets fall to the bottom of the dry steam chamber, to be removed through the condensate hole, and in turn the steam continues its course but is led or guided internally, free of those water droplets until the second phase, where any water microparticle that could be carried by the suspended steam is trapped by means of a filter inside the dry steam chamber, making the steam "dry" or in a "gas" state while also achieving energy savings, since the trapped microdroplets are re-steamed due to the high internal temperature and it is possible to take advantage of the energy already generated, without the need for those water particles trapped by the filter to once again pass through the steam generator or boiler in the form of condensates.

### FIELD OF APPLICATION OF THE INVENTION

The field of application of the present invention falls within the industry sector that can work with steam as a source of energy for its manufacturing processes.

### BACKGROUND OF THE INVENTION

As is known, in certain situations it is necessary to remove or reduce the water carryover generated by the pressure losses existing in steam installations. One example of this use is the industry dedicated to the manufacture of feed, in which temperature and humidity control is a very important factor for correct production, since it involves flour and the steam mixed with the flour carries water or water microparticles generates lumps and these lumps in turn make the motor of the granulator machine work harder, thereby consuming more energy than necessary, in addition to the risk that the motor is subjected to excessive stress.

Until now, devices of this type pass the steam with the suspended liquid particles through a filter that retains said particles and then makes the steam rise through an extraction tube towards the outlet, with the risk of once again entraining said particles or droplets that fall due to gravity and can mix again with the steam since they cross in the same direction as the steam.

The objective of the present invention is to provide the market with an improved system to achieve the same purpose, obtaining a more efficient result, which in turn contributes to protecting the environment. This is due to the fact that the steam generator or boiler has to work fewer hours and, in turn, emit less gases produced by combustion.

Furthermore, and as a reference to the current state of the art, at least the applicant is unaware of the existence of any other equipment capable of removing water droplets or microparticles, or any other invention with a similar application, which presents technical and structural features that are the same or similar to those presented by that which is claimed herein.

### DESCRIPTION OF THE INVENTION

The dry steam chamber proposed by the invention is configured as the ideal solution to the aforementioned objective, the characterising details that make it possible and that distinguish it being conveniently included in the final claims that accompany this description.

Specifically, the invention proposes, as noted above, a dry steam chamber applicable as a device for removing any existing water microparticle produced by the pressure losses generated by steam installations, for example in the industry such as a feed mill, which is essentially distinguished by the fact that it is made up of a hollow body through which steam is passed, inside of which it comprises a wall or impact cover on which the suspended liquid particles collide, falling to the bottom to be removed, and in which the steam is furthermore guided internally until it reaches a filter that retains the suspended particles and water microparticles that still may be contained therein before it leaves the chamber.

Furthermore, these particles retained in the filter can be re-steamed due to the internal temperature and the design of the equipment in question that takes advantage of the already existing energies for this purpose.

With this, in addition to making better use of the energy of the steam from the boiler, removing any suspended water microparticle that may exist, by first trapping said microparticles in the impact cover and then in the filter or demister to re-steam them with this technology, makes it so that the boiler is more efficient and does not have to work as much, which in turn contributes to protecting the environment and better energy efficiency, as well as producing more without increasing the consumption of the machine in the area in which it is being used.

### DESCRIPTION OF THE DRAWINGS

To complete the description provided herein, and for the purpose of helping to make the features of the invention more readily understandable, this description is accompanied by drawings constituting an integral part of the same, which by way of illustration and not limitation represents the following:
Figures 1 and 2 show side and front elevation views, respectively, of a first exemplary embodiment of the dry steam chamber object of the invention, specifically an example with the steam outlet tube located at the back of the chamber body, showing its general outer configuration;
figure 3 shows a section view of the chamber, according to the cut A-A indicated in figure 2, showing the inner parts of the chamber, as well as their arrangement and configuration;
figures 4 and 5 show side and front elevation views of a second example of the dry steam chamber, according to the invention, in this case with an upper outlet tube;
figures 6 and 7 show side and front elevation views of a third example of the dry steam chamber of the invention, specifically an example with a side outlet tube;
figure 8 shows a perspective view of the body of the dry steam chamber, showing its configuration and parts;
figures 9 and 10 show a perspective view of the rear cover and the opposite cover with a klopper-type bottom that closes the chamber body at both ends;
figure 11 shows a perspective view of the impact cover that the chamber has internally;
figure 12 shows a perspective view of the inner filter of the chamber; and
figures 13 and 14 show respective perspective views of the condensate outlet tube, which is attached at the bottom to the chamber, and the steam inlet tube with a hole for attaching the sleeve.

### PREFERRED EMBODIMENT OF THE INVENTION

In view of the aforementioned figures, and in accordance with the adopted numbering, one may observe therein several non-limiting exemplary embodiments of the dry steam chamber of the invention, comprising what is described in detail below.

Thus, as shown in said figures, the chamber (1) of the invention, applicable for its implementation in the steam installation that comes from boilers or steam generators, with the purpose of removing the water carryover content (water droplets, suspended water particles or microparticles), also known as pressure losses, caused by the pipe installations that are responsible for leading the steam from the steam generator or boiler to the existing point of consumption, making it pass therethrough, essentially comprises:
- a hollow body (2), closed on both sides with respective front (3) and rear (4) covers,
- a steam inlet tube (5) at one end of the body (2),
- a steam outlet tube (6) at the opposite side of the body (2),
- an impact cover (7) located vertically inside the body (2), close to the side where the steam inlet tube (5) is located, and covering only an upper portion of the interior of said body (2), such that the entering steam impacts its surface, condensing and making a first filtration, where the largest droplets are removed and fall to the bottom, separating from the steam that is forced to pass under said impact cover and is guided to the second and final phase of the process, to obtain a high title or title 1 steam,
- a condensate outlet tube (8), located at the bottom of the body (2), to collect the condensed particles from the bottom after colliding with the impact cover, and
- at least one demister filter (9) also installed inside the body (2), in a horizontal position and at half height, between the impact cover (7) and the rear cover (4), such that, with the circulation of the steam forced to pass under the impact cover (7), the water particles still contained by said steam are retained in said filter (9), allowing the steam to pass only in the "gas" state free of any water microparticles and in turn they can be re-steamed, by being subjected to the high temperature existing inside the chamber and taking advantage of the temperature carried by the steam that constantly arrives and passes through the filter (9).

Preferably, a sleeve (10) is connected to the steam inlet tube (5), said sleeve allowing a pressure gauge-type accessory to be attached and in turn is used to carry out pressure tests on the chambers (1).

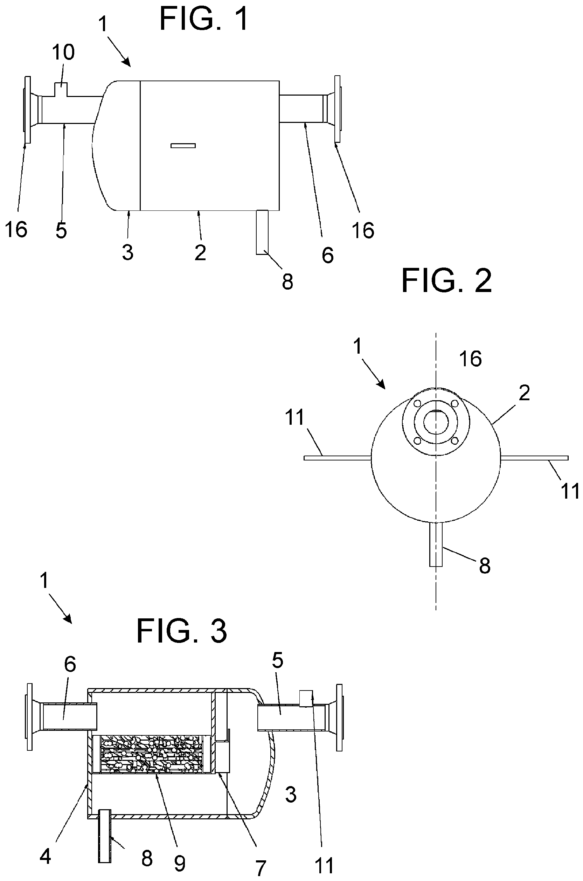

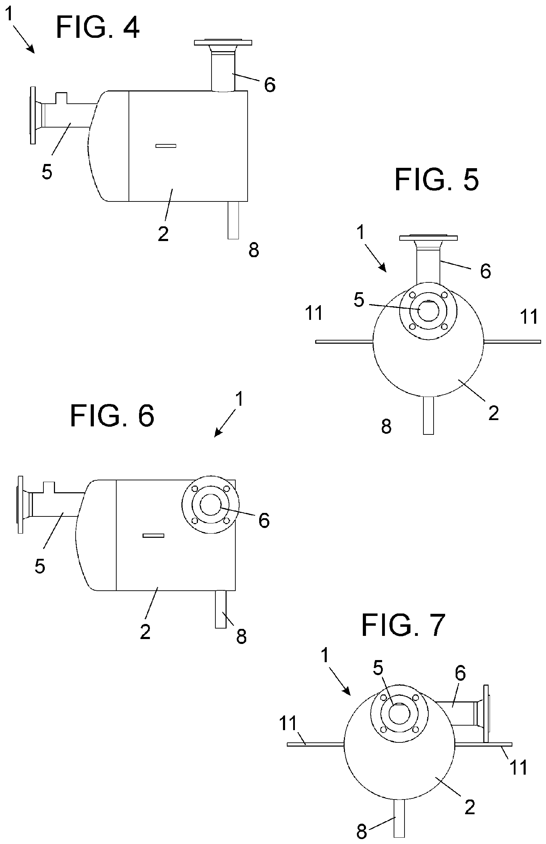

As shown in figures 1 to 3, in one embodiment, the steam outlet tube (6) is located at the back of the body (2), in the rear cover (4), although optionally it can be located at the top (figures 4 and 5) or laterally, either on the right side or left side of the body (2) (figures 6 and 7).

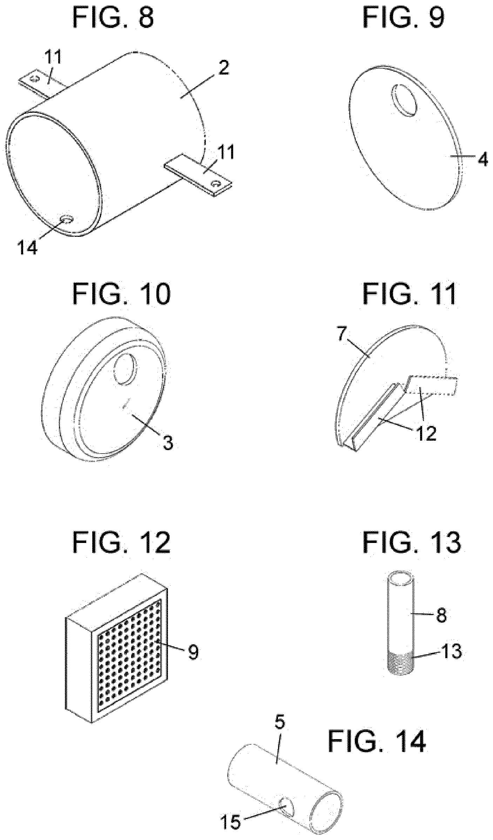

Figure 8 shows how, preferably, the body (2) is a cylindrical body provided with respective side plates (11) to facilitate its anchoring on the installation.

Preferably, the rear cover (4) is a flat part (figure 9), while the front cover (3) is a curved convex cover, preferably with a polycentric bottom with a 10:1 ratio, also known as a klopper bottom (figure 10).

Preferably, the impact cover (7) has guides (12) at the bottom to facilitate the removal of the droplets, leading them to the ends of the chamber taking advantage of its tubular shape and helping them fall to the bottom of the body (2).

Lastly, preferably, the condensate outlet tube (8) is fixed by means of a thread (13) to a bore (14) made for this purpose in the bottom of the body (2) of the chamber (1), and the steam inlet tube (5) also has a hole (15) for attaching the sleeve (10).

Furthermore, preferably, at the ends of the steam inlet (5) and outlet (6) tubes, the incorporation of a flange (16) for connecting them to the installation is contemplated.

Having sufficiently described the nature of the present invention, as well as the ways in which it may be implemented, it is not considered necessary to elaborate on the explanation thereof in order for a person skilled in the art to understand the scope of the invention and the advantages derived therefrom.

## Claims

1. A dry steam chamber, applicable for its implementation in a steam installation with the purpose of removing water content either in the form of droplets or any water microparticle produced by pressure losses in steam installations, which are made to pass therethrough, which comprises at least one hollow body (2), closed on both sides with respective front (3) and rear (4) covers, having a steam inlet tube (5) at one end of the body (2) wherein the diameter of the steam inlet tube (5) is smaller than the diameter of the hollow body (2), a steam outlet tube (6) at the opposite side of the body (2), and a condensate outlet tube (8), located at the bottom of the body (2),
which is **characterised in that** it comprises:
- an impact cover (7) located vertically inside the body (2), close to the side where the steam inlet tube (5) is located, and covering only an upper portion of the interior of said body (2),
and
- at least one demister filter (9) installed inside the body (2), in a horizontal position and at half height, between the impact cover (7) and the rear cover (4).

2. The dry steam chamber, according to claim 1, **characterised in that** a sleeve (10) is connected to the steam inlet tube (5).

3. The dry steam chamber, according to claim 1 or 2, **characterised in that** the steam outlet tube (6) is located at the back of the body (2), in the rear cover (4).

4. The dry steam chamber, according to claim 1 or 2, **characterised in that** the steam outlet tube (6) is located at the top of the body (2).

5. The dry steam chamber, according to claim 1 or 2, **characterised in that** the steam outlet tube (6) is located on the side of the body (2).

6. The dry steam chamber, according to any of the preceding claims, **characterised in that** the body (2) is a cylindrical body provided with respective side anchoring plates (11).

7. The dry steam chamber, according to any of the preceding claims, **characterised in that** the rear cover (4) is a flat part and the front cover (3) is a curved convex cover.

8. The dry steam chamber, according to any of the preceding claims, **characterised in that** the impact cover (7) has guides (12) at the bottom to facilitate the removal of condensates in its first phase (8).
